# EUROPEAN PATENT APPLICATION

(11) **EP 4 032 772 A1**
(43) Date of publication of application: **27.07.2022**
(21) Application number: 21185308.0
(22) Date of filing: 13.07.2021
(51) Int. Cl.: B60W 40/103, B60W 40/109, B60W 40/114, B60W 50/04

(54) **DEVICE AND METHOD FOR SIDESLIP ANGLE ESTIMATION FOR A MOTOR VEHICLE**

(30) Priority: 22.01.2021 IT 202100001106
(71) Applicant: Megaride S.r.l., 80141 Napoli (IT)
(72) Inventor: Sachnevych, Aleksandr, 80141 Napoli (IT); Timpone, Francesco, 80125 Napoli (IT); Farroni, Flavio, 80127 Napoli (IT)
(74) Representative: Conversano, Gabriele

(57) **Abstract**

Device for detecting a vehicle sideslip angle in real time, comprising: at least a triaxial accelerometer, at least a sensor for measuring the angular velocity for each wheel of said vehicle the sideslip angle is desired to be measured of, a sensor configured to acquire the vehicle steering angle, electronic computing means configured to acquire, from said sensors, the angular velocity of each wheel, the vehicle longitudinal acceleration, the steering angle and to provide in output the sideslip angle value of said vehicle, characterized in that on said computing means computer programs are loaded comprising: a first module configured to carry out calculations according to a physical model describing the vehicle features, configured to receive in input the values of the wheels angular velocity, longitudinal acceleration, steering angle acquired by means of said sensors and to provide in output a first value calculated for the sideslip angle of said vehicle; a second module comprising a neural network, configured to give back the value of the sideslip angle of said vehicle, said computing means being configured to provide in real time the values of the parameters acquired by means of said sensors to said first module and said second module, to acquire in real time the values of the sideslip angle provided by said first and second module and to check by means of the value of the sideslip angle provided by said first module the physical correctness of the value provided by said second module.

## Description

### Technical field

The present invention relates to a device configured to provide a precise and reliable estimation in real time, while a vehicle is driving on the road, of:
- the real longitudinal velocity of the vehicle centre of gravity;
- the real lateral velocity of the vehicle centre of gravity;
- the total velocity module of the vehicle centre of gravity in parallel direction to the plane tangential to the road in the considered moment;
- the vehicle sideslip angle.

It is to be specified that "vehicle sideslip angle" indicates the angle between the vehicle longitudinal direction and the velocity vector of its centre of gravity, measured on a plane parallel to the road and passing through the vehicle centre of gravity. Such measurement, according to what known at the state of the art, is carried out by means of very expensive devices based on measurement optical principles (Datron/Correvit).

### State of the art

Other means to carry out the vehicle sideslip angle estimation are known as well.

For example, in KR101015914 for the vehicle sideslip angle estimation in real time a pretrained neural network is used, which receives signals in input from sensors of yaw velocity, acceleration and vehicle speed. Anyway, in the device described therein there is no control carried out by means of physical models of the neural network effective output coherence with the effective kinematic condition.

In KR20200115710 is described instead an estimation logic of the vehicle yaw angle, which uses a neural network and a Kalman filter of not linear type arranged in series.

Also in this case, there is no control on the effective correctness of the data provided by the neural network.

### Technical problem

So, the problem to provide a device able to provide a precise and reliable estimation in real time, while a vehicle is driving on the road, of the vehicle sideslip angle, which is not subjected to the limits linked to the embodiments known at the state of the art, and which is able to check the coherence of the data estimated for the sideslip angle with the vehicle effective kinematic and dynamic condition remains unsolved.

### Aim of the invention

Aim of the present invention is to provide a device and a method for a motor vehicle sideslip angle estimation in real time, which is better than the embodiments known at the state of the art.

According to another aim, the present invention provides a device for a motor vehicle sideslip angle estimation in real time, which uses a neural network and a physical model together.

Yet, according to another aim, the present invention provides a device for a motor vehicle sideslip angle estimation in real time, in which the neural network and the physical model work in parallel, and the physical model is used to carry out a control (in real time) on the outputs produced by the network.

Yet, another aim of the present is to provide a device for a motor vehicle sideslip angle estimation in real time, which allows to update the coefficients defining the neural network, in order to consider explicitly the vehicle wear or the replacement of some components or adjustments of the same.

### Brief description

The device realizes the prefixed aims since it is a device for detecting a vehicle sideslip angle in real time, comprising: at least a triaxial accelerometer, at least a sensor for measuring the angular velocity for each wheel of said vehicle the sideslip angle is desired to be measured of, a sensor configured to acquire the vehicle steering angle, electronic computing means configured to acquire, from said sensors, the angular velocity of each wheel, the vehicle longitudinal acceleration, the steering angle and to provide in output the sideslip angle value of said vehicle, characterized in that on said computing means computer programs are loaded comprising: a first module configured to carry out calculations according to a physical model describing the vehicle features, configured to receive in input the values of the wheels angular velocity, longitudinal acceleration and steering angle acquired by means of said sensors and to provide in output a first value calculated for the sideslip angle of said vehicle; a second module comprising a neural network, configured to give back the value of the sideslip angle of said vehicle, said computing means being configured to provide in real time the values of the parameters acquired by means of said sensors to said first module and said second module, to acquire in real time the values of the sideslip angle provided by said first and second module and to check by means of the value of the sideslip angle provided by said first module the physical correctness of the value provided by said second module.

### Detailed description

The device according to the present invention, as described in the following, allows to carry out a very precise estimation of a vehicle sideslip angle by using cheap sensors and a suitable estimation logarithm, implemented in respective computer programs.

The device according to the invention comprises, installed in a vehicle:
- at least a triaxial accelerometer able to acquire the vehicle lateral and longitudinal acceleration;
- a system for measuring three angular velocities around axes orthogonal to each other (roll, pitch, yaw) .
   For example, such measuring system comprises a triaxial accelerometer and a gyroscope,
- at least a sensor for measuring the angular velocity for each wheel;
- a sensor configured to acquire the vehicle steering angle.

Moreover, the device comprises preferably but not limitingly a GPS sensor.

The device comprises also electronic computing means configured to acquire from said sensors:
- the angular velocity of each wheel;
- the vehicle longitudinal acceleration;
- the steering angle.

Said computing means acquire possibly also the vehicle position by means of said GPS sensor.

Said computing means are configured to provide in output the values of:
- lateral acceleration;
- yaw rate;
- sideslip angle;
- module of the velocity vector.

In order to obtain the estimation of such parameters, on said computing means computer programs are loaded, comprising:
- a first module configured to carry out calculations according to a physical model describing the vehicle features, configured to receive in input the values of the wheels angular velocity, longitudinal acceleration, steering angle and vehicle velocity acquired by means of the sensors onboard and to provide in output the values of lateral acceleration, yaw rate, sideslip angle;
- a second module configured to execute a neural network, said neural network being configured to give back the values of lateral acceleration, yaw rate, sideslip angle, and module of velocity vector and being trained according to modes described in the following.

The system is characterized in that said computing means are configured to provide in real time the values of the parameters acquired by said sensors to said first module and said second module, to acquire always in real time the results of said first and second module and to check by means of said first module the correctness of the results obtained by means of said second module.

In order to understand the usefulness of what just described, it is in fact to be considered that all the results provided by artificial intelligence tools, such for example a neural network - derive from complex not linear interpolations of the data provided in input to the network.

Since the neural network has only information concerning the data acquired during the training maneuvers, but not the capacity to process in deterministic way the information linked to the vehicle physics, such not linear interpolations could lead to not realistic results when the vehicle works in different or partially different conditions from the set of conditions tested during the training maneuvers.

To solve this problem, the device according to the present invention is configured to compare time after time the outputs provided by the first computing module and the outputs provided by the second computing means, thus checking that the deviation is in a predetermined admissible threshold.

This comparison is useful to determine if the outputs of the second module are physically coherent.

Once the physical coherence is checked, it can be concluded that the data provided by the second computing module are reliable and so usable for following processing.

The device is based in fact on the idea that the first computing means, since it is based on physical parameters processing, always provides acceptably precise results (meaning that they are never clearly wrong), but that have inevitably all the approximations that any computing means has, particularly referring to the characterization of all the parameters defining the model.

In other words, the results of the first module are only indicative of the real output values.

On the contrary, the results of the second computing module are very precise, provided that all the marginal conditions (wheel angular velocities, vehicle longitudinal acceleration, steering angle, vehicle speed) are contained in the n-dimensional space of the acquisition conditions tested. Anyway, when the marginal conditions go out from such n-dimensional space, the neural network could provide results affected by errors, even significant, without the neural network itself has check tools.

It is to be specified that "module configured to carry out calculations according to a physical model describing the vehicle features" indicates a computing module configured to solve a set of kinematic and dynamic equations describing the vehicle behaviour, as a function of the structural features of the vehicle (weights and geometry of the various components) and of the marginal conditions (velocity and accelerations).

At the state of the art, a plurality of physical models of this kind is known per se, and the choice of these models can be conveniently done as a function of the specific vehicle under test or as a function of the type of test conditions carried out.

The device according to the invention is configured to check, by means of a comparison of the results of the two modules, that the tested conditions are in the reliability field of the neural network, and so that the results obtained are reliable.

It is now described the training mode of the neural network calculated in said second module, and as the same can be updated and newly trained while the vehicle features vary.

The neural network is trained according to the method comprising the steps of:
100) defining a list of maneuvers of the vehicle to be used for the neural network training.
   Said list comprises preferably but not limitingly the maneuvers of:
   1. acceleration/braking;
   2. circles;
   3. slalom;
   4. handling
   Generally, said list of maneuvers to be used for the neural network training comprises a group of maneuvers which, as a whole, subject the vehicle to varied stress conditions, so to cover all the conditions the vehicle can possibly go through during its real functioning.
200) carrying out the maneuvers of point 100) with the vehicle on which the device according to the invention is installed and on which a system for measuring the sideslip angle which uses measuring optic principles is also installed (Ex. Datron Correvit) ;
300) acquiring during the maneuvers of point 200) all the values detected by the sensors provided on the vehicle, as well as the values of sideslip angle measured with said measuring system of point 200);
400) subdividing the group of data acquired at point 300 in a training set and a learning set;
500) training said neural network by means of said training set extracted at point 400) from said values acquired at point 300);
   It is to be specified that in order to guarantee that the device guarantees a reliable evaluation of the parameters calculated, it is needed that a new calibration is carried out in case the vehicle features are altered, which could lead to variations in vehicle response to determined inputs.

So, it is needed a new calibration in case of parameters modification, as for example the type of tires, sideslip, vehicle mass.

The new calibration step can be conveniently carried out by means an approach known at the state of the art as "reinforcement learning", with the goal to reduce the errors between the calculated and the measured parameters.

Once the neural network contained in said second module is calibrated, it is possible to eliminate the expensive measuring tool which uses the measurement optical principles and to obtain in real time the precise and physically coherent values of the longitudinal velocity of the vehicle centre of gravity, of the lateral velocity of the motor vehicle centre of gravity, of the module of motor vehicle centre of gravity total velocity in parallel direction to the plane tangential to the road in the moments considered, of the motor vehicle sideslip angle, of the lateral acceleration in parallel direction to the plane tangential to the road and of the yaw rate in orthogonal direction to the plane tangential to the road. In order to guarantee that the device guarantees a reliable evaluation of the parameters calculated, it is needed that it carries out a new calibration in case the vehicle features are altered: tires, sideslip, mass etc., which could lead to variations in the vehicle response to determined inputs. This new calibration is carried out by using as pilot data the values of lateral acceleration in parallel direction to the plane tangential to the road and yaw rate in orthogonal direction to the plane tangential to the road.

With the new calibration, it is possible to consider for example the tires wear.

In addition, it is possible to use the data coming from GPS (whose provision is preferred but not limiting the aims of the invention) to provide another element of comparison for the calibration and validation of the artificial intelligences. According to the specifications of the GPS device in terms of accuracy and sampling frequency, it is possible to get some benefits therefrom:
- improving the identification of not physical outputs of the algorithm;
- identifying the need to calibrate newly the algorithm upon a variation of the motor vehicle setup,
- widening the data set in input to the algorithm so to obtain a more precise estimation of the parameters of interest.

According to another aim, the present invention provides a vehicle comprising a device of the just described type.

## Claims

1. Device for detecting a vehicle sideslip angle in real time, comprising:
- at least a triaxial accelerometer,
- at least a sensor for measuring the angular velocity for each wheel of said vehicle the sideslip angle is desired to be measured of,
- a sensor configured to acquire the vehicle steering angle,
- electronic computing means configured to acquire, from said sensors, the angular velocity of each wheel, the vehicle longitudinal acceleration, the steering angle and to provide in output the sideslip angle value of said vehicle,
**characterized in that** on said computing means computer programs are loaded, comprising:
- a first module configured to carry out calculations according to a physical model of the vehicle, configured to receive in input the values of the wheels angular velocity, longitudinal acceleration, steering angle acquired by means of said sensors and to provide in output a first value calculated for the sideslip angle of said vehicle;
- a second module comprising a neural network, configured to give back the value of the sideslip angle of said vehicle,
said computing means being configured
- to provide in real time the values of the parameters acquired by means of said sensors to said first module and said second module,
- to acquire in real time the values of the sideslip angle provided by said first and second module,
- to check by means of the value of the sideslip angle provided by said first module the physical correctness of the value provided by said second module.

2. Device according to claim 1, configured to compare the sideslip angle value provided by said first module and the sideslip angle value provided by the second module, and to check if the difference between said values is in a predetermined admissible threshold.

3. Device according to claim 1 or 2, comprising further a GPS sensor and **characterized in that** said computing means are configured to acquire also the vehicle position by means of said GPS sensor.

4. Device according to any one of the preceding claims, **characterized in that** said first module and said second module are configured further to provide in output the values of:
- lateral acceleration of said vehicle;
- yaw rate of said vehicle;
- sideslip angle of said vehicle;
- module of the velocity vector of said vehicle.

5. Method for the configuration of a device according to any one of the preceding claims, comprising the following steps of:
100) defining a list of maneuvers of the vehicle to be used for the neural network training,
200) carrying out the maneuvers of point 100) with the vehicle on which the device according to the invention is installed and on which a system for measuring the sideslip angle which uses measuring optic principles is also installed;
300) acquiring during the maneuvers of point 200) all the values detected by the sensors provided on the vehicle, as well as the values of sideslip angle measured with said measuring system of point 200);
400) subdividing the group of data acquired at point 300) in a training set and a learning set;
500) training said neural network contained in said second module by means of said training set extracted at point 400) from said values acquired at point 300).

6. Method according to claim 5, **characterized in that** said list of maneuvers of point 100) comprises a group of maneuvers which, as a whole, subject the vehicle to stress conditions so to cover all the conditions the vehicle can possibly go through during its real functioning.

7. Vehicle comprising a device according to any one of the preceding claims.
